Europäisches Patentamt

European Patent Office

Office européen des brevets

(19)

(11) Publication number: **0 157 460**
A2

(12) # EUROPEAN PATENT APPLICATION

(21) Application number: **85200499.3**

(22) Date of filing: **02.04.85**

(51) Int. Cl.⁴: **H 04 N 7/10**

(30) Priority: **05.04.84 GB 8408859**

(43) Date of publication of application: **09.10.85**
Bulletin 85/41

(84) Designated Contracting States: **CH DE FR GB IT LI SE**

(71) Applicant: **PHILIPS ELECTRONIC AND ASSOCIATED INDUSTRIES LIMITED, Arundel Great Court 8 Arundel Street, London WC2R 3DT (GB)**

(84) Designated Contracting States: **GB**

(71) Applicant: **N.V. Philips' Gloeilampenfabrieken, Groenewoudseweg 1, NL-5621 BA Eindhoven (NL)**

(84) Designated Contracting States: **CH DE FR IT LI SE**

(72) Inventor: **MacArthur, Alastair c/o Philips Business Systems, Communication and Control Division Cromwell Road, Cambridge CB1 3HE (GB)**

(74) Representative: **Andrews, Arthur Stanley et al, Philips Electronic and Associated Industries Limited Patent Department Mullard House Torrington Place, London WC1E 7HD (GB)**

(54) **Closed circuit television system.**

(57) A closed circuit television system comprises a television camera (1), a frequency modulator (2), a series of lengths of transmission lines (3, 5, 7, 9, 11) forming a transmission path having correcting amplifiers (4, 6, 8, 19) at intervals along its length, a demodulator (12), and a television monitor (13). The transmission lines (3, 5, 7, 9, 11) are formed by balanced pair telephone conductors.

One application of such a system is in monitoring conditions on motorways in the U.K. It is advantageous in this environment to be able to use the existing cables which are already installed along the length of the motorway system and by frequency modulating the video signal on a low frequency carrier so that the bandwidth of the frequency modulated signal lies between 1 and 5 MHz transmission of the signal over greater distances that previously possible can be achieved.

## CLOSED CIRCUIT TELEVISION SYSTEM.

The invention relates to a closed circuit television system in which video signals are transmitted over balanced pair conductors.

Closed circuit television systems have been used alongside the British motorway system where the transmission of the video signals has been in baseband over balanced pair cables which are installed alongside the motorway, mainly for telephone applications. Distances of up to 8 miles have been covered using correctly adjusted opto-coupled equalizer equipment. However, the pictures obtained are not consistent in quality due to changes in video level with extremes of temperature. As the transmission distances are increased beyond about 8 miles inherent technical problems caused by the cumulative effect of cable and amplifiers makes the system unusable. These problems involve non-linearity and gain change with temperature in the video correctors; low frequency streaking caused by the cumulative effect of cable capacitance; low frequency differentiation of the video signal causing momentary loss of frame synchronising pulses, this occurs particularly when a large proportion of the signal goes to peak white, for example when the camera originating the signal is tilted towards the sky; and synchronising pulse distortion.

It is an object of the invention to enable the provision of a closed circuit television system which will operate using a single twisted pair of the standard multi-pair cable installed alongside a British motorway.

The invention provides a closed circuit television system comprising a television camera, a frequency modulator for frequency modulating the video signal produced by the camera, means for feeding the frequency modulated video signal to one end of a transmission path comprising balanced pair conductors provided with video correcting amplifiers at intervals along its length, a demodulator for demodulating the signal received at the other end of transmission path, and a television monitor for displaying the video signal, in which the demodulator includes a high pass filter which is effective to reduce the amplitude of the lower side band of the frequency modulated signal relative to that of the carrier signal.

A frequency modulated video carrier system which operates within the restraints of the passband of 1Mhz to 5Mhz can produce acceptable results well in excess of the previous maximum distance of about 8 miles. By frequency modulating the video signal the problems mentioned earlier can be largely overcome. The non-linearity of the video signal near to peak white is reduced or eliminated as this is a function of amplitude. Low frequency streaking mainly occurs in the frequency range 10 to 100kHz and since these frequencies are no longer used this problem is again substantially reduced or eliminated. Gain variations due to temperature still occur but they will only alter the overall carrier level. This may be taken care of by automatic gain control and limiting action in the demodulator. The video output level of the demodulator is a function of the frequency change only and not of amplitude of the frequency modulated signal. Synchronising pulse distortion is mainly caused by poor low frequency response in the region from 50Hz to 50kHz. Since these frequencies are not used in a frequency modulated system this problem is greatly reduced or eliminated.

The cut-off frequency of the high pass filter may be adjustable. This enables the relative amplitudes of the carrier signal and the lower sidebands to be adjusted to obtain optimum performance of the transmission link. The cut-off frequency of the high pass filter may be adjustable about a nominal cut-off frequency of 1MHz.

A data channel may be frequency division multiplexed with the video signal. The data channel occupying the area of the frequency spectrum below that of the frequency modulated video signal. The data channel could, for example, be used to transmit information such as wind speed or temperature from sensors adjacent to the television camera to the control room. The frequency demodulator may include a duplex limiter circuit which comprises first and second branches, the first branch comprising a low pass filter and the second branch comprising a high pass filter and a first limiting amplifier arranged in cascade, the first and second paths being combined at their outputs in a second limiting amplifier.

This enables the high frequency components of the frequency modulated signal to be recovered more effectively when their amplitude in very much smaller than that of the low frequency components thus extending the range over which the transmission can take place.

The modulator may comprise a gain controlled amplifier the gain of which is reduced when the input video signal exceeds a preset level to prevent the output video signal from exceeding said preset level.

By restricting the action of the automatic gain control to the condition when the input video signal is above a preset level, typically 700 to 750mV the camera controls can be set remotely without the AGC circuit masking the effects of the control settings.

Since the television camera is usually at a remote location perhaps 20 miles or more, from the control room where the tv monitor is housed, it is desirable to be able to control camera functions from the control room. In order to do so a transmission link must be provided between the control room and the television camera. This could easily be effected by using a further pair ofconductors from the multi-pair cable installed along side the motorway. However the number of pairs is strictly limited and generally a spare pair is not available.

It is a further object of the invention to enable the provision of a system in which the television camera can be controlled from a control room using the same balanced pair conductors as is used for transmitting the video signal from the television camera to the control room.

The invention further provides a closed circuit television system comprising a television camera, a television monitor, a transmission path linking the monitor and camera for transmitting video signals from the camera to the monitor, the transmission path comprising balanced pair conductors and having correcting amplifiers at intervals along its length, means for frequency modulating the video signal produced by the camera so that frequencies below a given frequency are not transmitted, and means for transmitting control signals having frequencies below said given frequency from the television monitor, or a position adjacent thereto, to the television camera along the transmission path, in which at each correcting amplifier a by-pass link is provided, said by-pass link comprising a low pass filter having a cut off frequency below said given frequency and in which a high pass filter is provided at the input of each correcting amplifier to prevent the said control signals from being applied to the input of the correcting amplifier.

Embodiments of the invention will now be described, by way of example, with reference to the accompanying drawings, in which:

Figure 1 is a block diagram of a first embodiment of a closed circuit television system according to the invention,

Figure 2 is a block diagram of a modulator for use in the system shown in of Figure 1,

Figure 3 is a block diagram of a demodulator circuit for use in the system shown in Figure 1,

Figure 4 shows a block diagram of a duplex limiter for use in the demodulator shown in Figure 3,

Figure 5 shows a block diagram of a noise suppressor for use in the demodulator shown in Figure 3,

Figure 6 shows a peak white AGC circuit for use in the modulator shown in Figure 2,

Figure 7 shows a block diagram of a second embodiment of a closed circuit television system according to the invention, and

Figure 8 shows a two-way correcting amplifier used in the system of Figure 7.

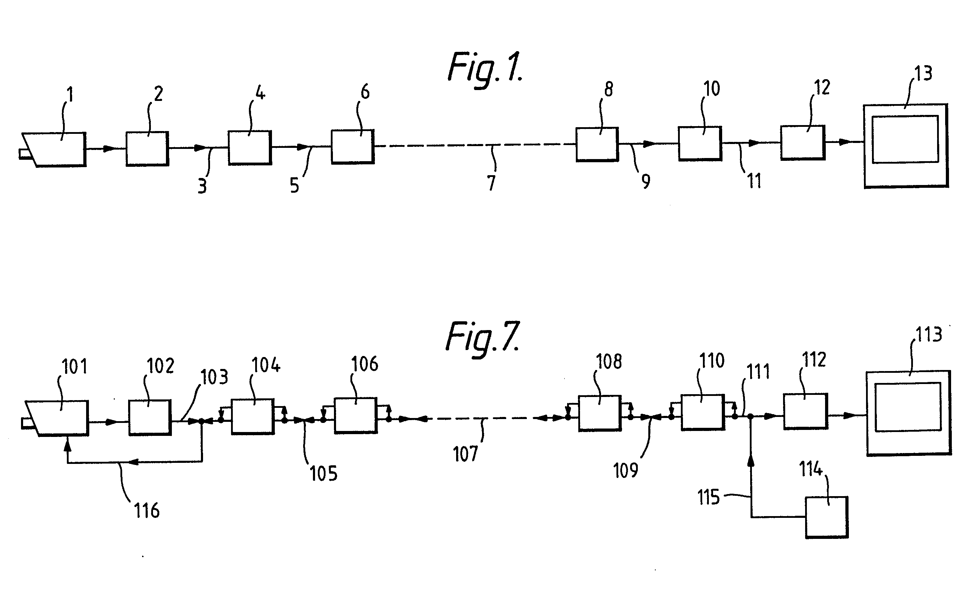

The closed circuit television system as shown in Figure 1 comprises a television camera 1 whose output is connected to a frequency modulator 2. The output of the frequency modulator 2 is fed via a transmission path comprising a balanced pair of conductors to a correcting amplifier 4. The output of the correcting amplifier 4 is fed _via_ a further length of balanced pair conductors to a further correcting amplifier 6. A number of further lengths of balanced pair conductors and correcting amplifiers are denoted by the dotted line 7 which feeds the input of a correcting amplifier 8 whose output is fed _via_ balanced pair conductors to the input of a further correcting amplifier 10 whose output is again fed _via_ balanced pair conductors to the input of a demodulator 12. The output of the demodulator 12 is fed to a television monitor 13.

In previous closed circuit television systems for use alongside the motorway network in the United Kingdom the distance between the camera and the monitor has been up to of the order of 8 miles. The lengths of balanced conductor 3,5 etc. between the correcting amplifiers have been around 1 mile. For the new system using frequency modulated signals the distances between the correcting amplifiers may be of the same order as with the baseband system and the correcting amplifiers may be of the same type since the frequency modulated signal is restricted to the frequency band between 1 and 5Mhz.

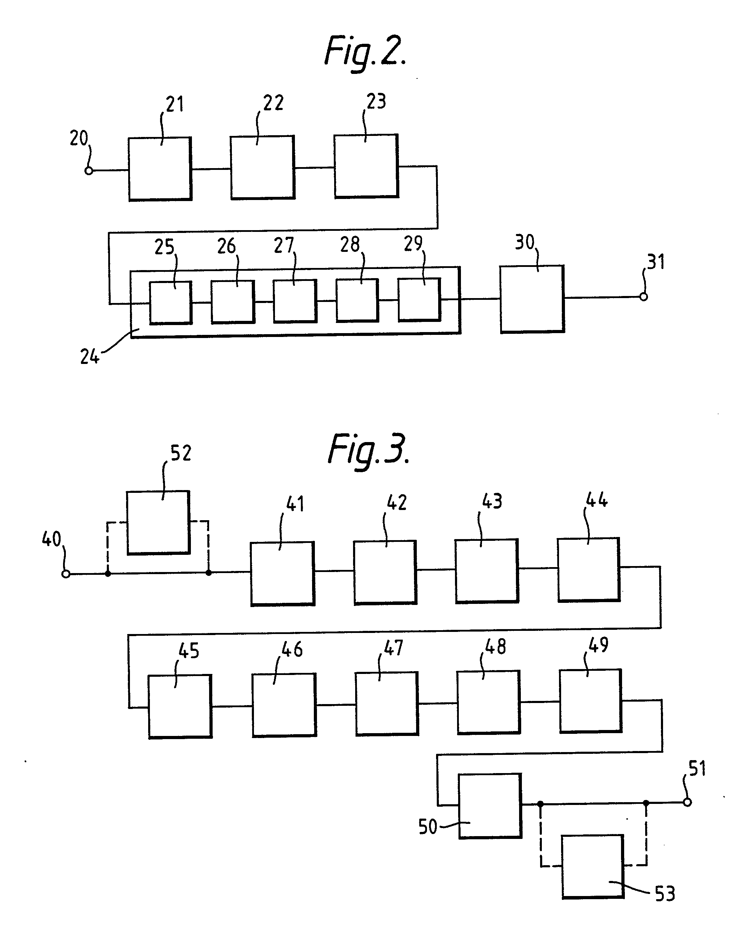

An embodiment of a frequency modulator suitable for use as the frequency modulator 2 is shown in greater detail in Figure 2. The frequency modulator shown in block schemmatic form in Figure 2 has an input 20 which is connected to a circuit arrangement 21 which provides an automatic gain control for the peak white portion of the video signal. The output of the circuit 21 is fed to a further circuit 22 which provides automatic amplitude control of the synchronising pulses and clamps the video signal on a line by line basis. The output of the circuit 22 is fed _via_ a 3Mhz low pass filter 23 to a frequency modulator 24. The frequency modulator 24 comprises a clamp circuit 25, pre-emphasis circuit 26, a clipping circuit 27, a modulator 28 and a limiter 29. The output of the frequency modulator 24 is fed _via_ a low pass filter having a cut off frequency of 6Mhz and a line driver circuit 30 to an output 31.

Initial considerations would seem to indicate that a constant level synchronising pulse and constant level video signal is all that is required to drive a modulator. In practice, however, this has been found to be only partly true. Constant synchronising pulse level is correct but constant video level provided by an automatic level control circuit has some serious drawbacks in practice. This is mainly caused by the design of the television camera used on motorways and manufactured to Department of Transport specifications. These cameras have remote control of black level of the video signal and have a complicated automatic iris control circuit with manual override. The camera will also produce excessive peaks above the nominal 700 millivolts video signal in bright sunlight, sometimes 200 to 300 millivolts above the 700 millivolt level. If an automatic video level control circuit is used any attempt to set the camera controls remotely will be defeated by the AGC action of the circuit. The video output of the demodulator does not then bear a direct relationship with what is happening at the camera output due to the AGC action at the modulator. It is therefore quite possible to confuse the automatic iris control circuit and to cause a complete loss of picture. This would require a visit to the camera site to reset the camera manually which is both inconvenient and expensive since the camera may be many miles from the control centre and in an inaccessible position. However this does not mean that it is not important to control the video level as any increase above 700 millivolts will cause the modulator upper frequency to exceed the limits of the passband causing inversion of the signal at the demodulator. The peak white AGC circuit 21 is provided as a solution to this problem. This circuit does not affect the video signal level provided it stays below a preset limit, typically 750 millivolts. The output is a faithful reproduction of the input below the preset level. However, once the preset level is reached the AGC control comes into action. A control voltage is derived from that part of the signal lying above the preset limit and applied to a gain

0157460

controlled amplifier to rapidly reduce its gain. Consequently any peaks above the nominal video level are removed and it is also possible to put the camera on manual iris and not cause the modulator to over deviate.

The peak white AGC circuit 21 takes care of the video level problem, but the composite video signal contains synchronising information and the synchronising information has to be held at a constant level. This is achieved in the synchronsing and clamping AGC circuit 22 which is a conventional synchronising and video processing unit. In this unit the synchronising information is removed from the composite signal by passing it through a synchronising signal separator circuit. The synchronising signal is then re-shaped and added back into the video signal which has had the original synchronising signal removed from it. The composite video output signal then contains synchronising pulses which have been re-shaped and are of constant level independent of any input variations. The unit also clamps the video on a line by line basis to remove any low frequency tilt. The signal is then passed through a 3Mhz low pass filter to remove video frequencies above this limit. This is necessary to avoid patterning on the demodulated signal. With frequency modulated systems of this type no video signal should be applied to the modulator which has a frequency higher that the minimum carrier frequency. The low pass filter is followed by a clamp circuit which sets the dc level of the synchronising pulse tips and consequently sets the lower frequency of the modulator. Pre-emphasis is now applied to the video signal to improve the signal to noise ratio. Before being applied to an astable multivibrator which forms the frequency modulator the signal is passed through a black and white level clipper to limit the extent of the pre-emphasis and to avoid over modulation. The output of the modulator is then passed through a limiter to remove any amplitude variations and then to a line driver stage with a low impedance output. The line driver stage includes a 6Mhz low pass filter to re-shape the modulator output back to a sine wave and remove harmonics. Without the low pass filter severe reflections occur on the demodulated video making the system unusable.

The received FM signal at the output of the corrector 10 is applied to the input of the demodulator 12. Figure 3 shows in block schematic form an embodiment of a demodulator which is suitable for use as the demodulator 12 and has an input 40 connected to the input of a high pass filter 41. The output of the high pass filter is passed through an automatic gain control circuit 42 and a 5Mhz low pass filter 43 to a limiter 44. The limited signal is demodulated in a synchronous demodulator 45 and then passed through a 3Mhz low pass filter 46 to a de-emphasis circuit 47. The output of the de-emphasis circuit 47 is applied to a picture enhancement circuit 48 and from there to a processing circuit 49 which inserts blanking and adjusts the black level. The output of the processing circuit 49 is passed through a video output stage 50 to an output terminal 51 which is connected to the video monitor.

To improve the performance a duplex limiter 52 may be inserted between the input 40 and the input of the high pass filter 41 and a noise suppressor 53 may be connected between the output of the video output stage 50 and the output terminal 51.

The high pass filter 41 has an important effect on the operation of the entire system. In an ideal situation where the frequency response of the transmission path being used is flat from 0.5Mhz to 5Mhz the demodulator will operate satisfactorily without the 1Mhz filter; the only effect it will have when it is brought into play is to reduce the horizontal resolution by reducing the amplitude of the lower side band. However this situation changes drastically when the frequency response is not flat but falls as frequency increases particularly as the distance between the modulator and demodulator increases. As this distance increases the frequency response becomes progressively worse so that the losses at 5Mhz become increasingly greater that those at 0.5Mhz. As the path length increases then proportionally the FM carrier is reduced, having a much smaller amplitude than the lower sideband in the range between 1 and 2Mhz. If the amplitude of the lower sideband exceeds that of the carrier the limiter in the demodulator does not operate correctly and some video information becomes lost.

The use of the 1Mhz high pass filter appears to be disadvantageous in that it reduces the horizontal resolution. However since the sidebands in the region 1Mhz to 2Mhz increase in amplitude relative to the higher frequency components the corresponding reduction in their amplitude by the high pass filter merely cancels out the relative increase to produce a more level response. The signal from the 1Mhz filter is passed to the AGC circuit 42 which is formed by a gain controlled amplifier. This will produce a constant carrier signal level over a wide range of input levels. The control voltage for the gain controlled amplifier is produced by rectification of the frequency modulated signal. Subsequently the signal is applied to a 5Mhz low pass filter to remove any unwanted frequency components generated by the AGC circuit and the upper side bands which contribute little to the picture and reduce the signal to noise ratio. The frequency modulated signal is now applied to a limiter and synchronous demodulator which may be formed by a type TDA 2730 integrated circuit available in the U.K. from Mullard Limited. The demodulated video signal is passed through a 3Mhz low pass filter to attenuate all frequencies outside the video pass band. Equal and opposite de-emphasis is used to cancel out the pre-emphasis applied in the modulator for improving the signal to noise ratio and is effected after the 3Mhz filter.

Since the bandwidth of the system is limited to 3Mhz a square wave will have its rise and fall times increased resulting in transitions which are not sharp when displayed on a video monitor. It is therefore desirable to enhance or sharpen the perceived definition. This is achieved by the enhancement circuit 48. This circuit differentiates each transition and adds the differentiated signal to the initial signal to sharpen each edge in a conventional manner. By these means the apparent horizontal resolution is substantially increased. The video signal at the output of the enhancement circuit 48 may be taken directly to a low impedance output stage 50 and fed from there to a television monitor.

If the video signal is to be re-launched either by means of another modulator or through a baseband circuit for a further distance it is necessary to reprocess the synchronising pulses and to re-insert line and frame blanking. It is also desirable to be able to adjust the black level of the video signal if it is going to be combined with another video signal source in a video mixer.

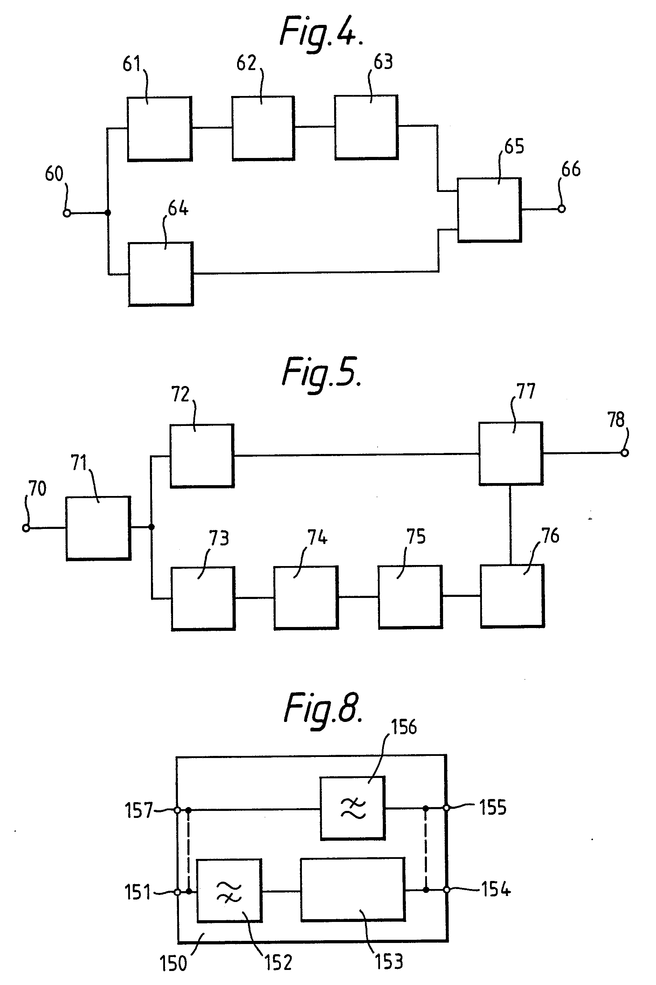

Figure 4 shows an embodiment of a duplex limiter suitable for use as the duplex limiter 52 in the demodulator of Figure 3. As shown in Figure 4 the duplex limiter has an input of 60 which is connected to the input of a high pass filter 61 and of a low pass filter 64. The output of the high pass filter 61 is fed to a phase corrector 62 whose output is fed to a first limiter 63. The output of the low pass filter 64 and the output of the first output of the first limiter 63 are fed to first and second inputs of a second limiter 65 in which the two signals are added together and further amplified before being passed to an output 66. Thus, in operation, the high frequency component of the input signal is separated from the low frequency component by means of the high and low pass filters. The high frequency component is phase corrected to compensate for phase shifts introduced by the filters and is then amplified to give an increased amplitude signal which is then mixed with the low frequency component in the limiter 65 to produce a signal having a constant limited output. The high frequency component of the FM signal corresponding to the peak white of the video signal is mixed onto a lower frequency component forming a complex signal. Without the double limiting circuit the high frequency component tends to get lost with the result that the white parts of the picture are not displayed correctly.

When the overall amplitude of the FM signal falls to a low value noise may become a problem as the signal to noise ratio is reduced. To improve the signal to noise ratio a noise suppressor 53 may be inserted between the output of the output stage 50 and the terminal 51 in the demodulator. A suitable noise suppression circuit which is shown in Figure 5 has an input 70 which is coupled through aninput buffer amplifier 71 to an integrator 72 and a differentiator 73. The output of the differentiator 73 is fed through an amplifier 74 and a threshold detection circuit 75. The threshold circuit will remove low amplitude noise between the peaks caused by the differentiation. The output of the threshold circuit 75 is fed to a buffer amplifier 76 whose output is mixed with that of the integrator 72 in a mixing amplifier 77 whose output is fed to an output terminal 78.

Generally the noise lies in the high frequency region and its amplitude is relatively low. The noise suppressor divides the video signal into two frequency regions, one high and one low. For the high frequency region a threshold level is established. Any portion of the signal whose amplitude is below the threshold is blocked on the basis that if the signal is that low in amplitude and has a high frequency it must be noise. The rest of the high frequency signal is mixed back into the low frequency portion to re-create the original signal without low level high frequency noise. The low frequency signal passes through the integrator 72 to the mixing amplifier 77 while the high frequency signal is differentiated in the differentiator 73 and only those parts of the high frequency signal which have a high amplitude cause the output of the threshold circuit 75 to change. Thus, the threshold circuit 75 effectively blocks low amplitude high frequency signals.

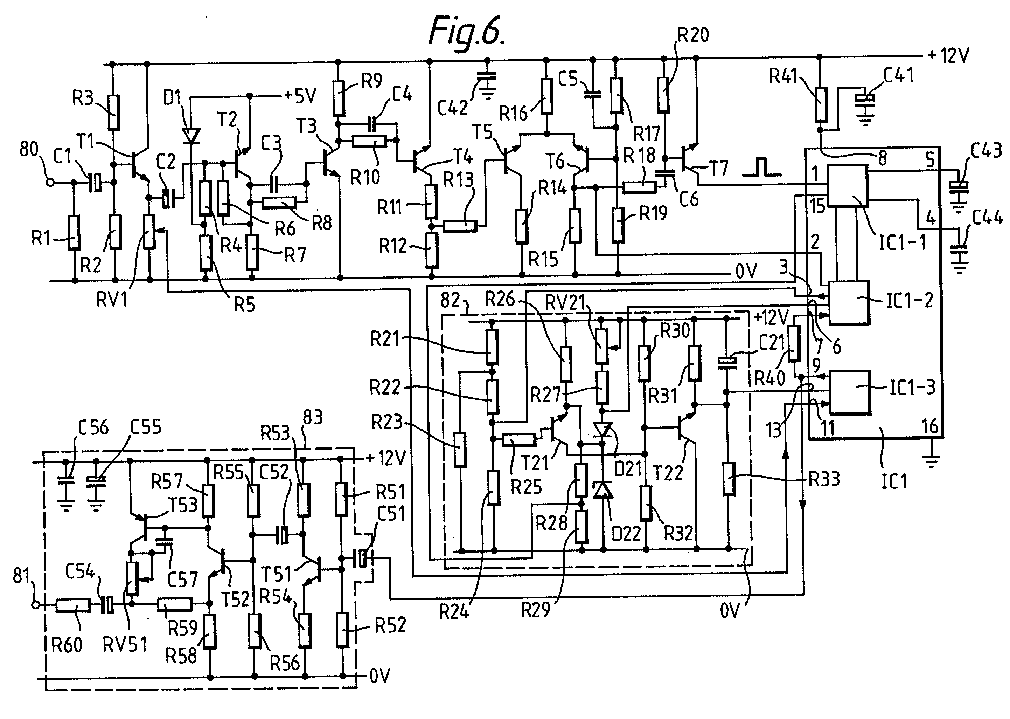

Figure 6 shows an embodiment of a peak white AGC circuit suitable for use as the circuit arrangement 21 of the modulator 2. The peak white AGC circuit has an input 80 which is applied to a capacitor C1 and transistor T1 and is tapped from a variable resistor RV1 to an input pin 11 of an integrated circuit IC1 which is of the type TDA 2500 as sold by Mullard Limited. This integrated circuit includes a clamp circuit IC1-1, a blanking insertion and output stage IC1-2, and a gain controlled amplifier IC1-3. The input video signal tapped from the variable resistor RV1 is fed to the input of the gain controlled amplifier stage IC1-3. The output of the gain controlled amplifier stage IC1-3 on pin 9 of IC1 is fed _via_ a capacitor C51 to an output stage 83 which comprises those resistors, capacitors and transistor whose reference numbers range from 51 upwards. The video output signal is taken from output terminal 81. The portion of the circuit within the box 82 is used to produce a control signal on pin 13 of IC1 to control the gain of the gain controlled amplifier IC1-3.

When the input video signal rises above a preset value, for example 750 millivolts, the transistor T22 is turned on and the control voltage on pin 13 of the gain controlled amplifier is reduced towards to 0V. As a result the gain of the amplifier stage ICI-3 is reduced to prevent the signal level from increasing above the preset value. The response of the circuit in this direction is fast as the transistor T22 pulls the output on pin 13 towards the 0V rail directly. When transistor T22 turns off the gain does not increase so quickly because of the effect of the capacitor C21. When the amplitude of the input video signal is below the preset level transistor T22 is non conductive and the voltage on pin 13 is set by the potential divider comprising resistors R31 and R33. The threshold voltage above which transistor T22 starts to turn on is controlled by the variable resistor RV21.

The effect of this circuit is to remove spikes on the video signal which extend above a threshold level, for example 750 millivolts, but to have no effect on the gain of the system provided that the video level remains below 700 millivolts.

Figure 7 shows a second embodiment of a closed circuit television system according to the invention. The system shown in Figure 7 has a television camera 101 whose output is connected to a frequency modulator 102. The output of the frequency modulator is fed _via_ a transmission line 103 to a correcting amplifier 104. The output of the correcting amplifier 104 is fed _via_ a further length of transmission line 105 to a further correcting amplifier 106. The output of the further correcting amplifier 106 is fed _via_ a number further lengths of transmission line and correcting amplifiers represented by the dotted line 107 to the input of a correcting amplifier 108. The output of the correcting amplifier 108 is fed _via_ a transmission line 109 to a further correcting amplifier 110 whose output is fed _via_ a further transmission line 111 to the input of a demodulator 112. The output of the demodulator 112 is connected to a television monitor 113.

It is desirable to be able to control the functions of the camera 101 from a position adjacent to the monitor 113. The monitor 113 is normally arranged in a control room where an operator can view the picture and have a control panel which will control the field of view and other parameters of the camera 101. In order to achieve this an output of a control unit 114 is connected to the transmission line 111 _via_ a further transmission path 115. Signals from the control unit 114 by-pass each of the correcting amplifiers 110 down the length of the transmission path to the camera. The transmission path 103 which feeds the output of the modulator 102 to the correcting amplifier 104 and also feeds the control signals in the opposite direction is further connected to a transmission path 116 which feeds the control signals to a control input of the camera 101.

The control signals from the control unit 114 are of low frequency and hence do not interfere with the video signals which are frequency modulated and pass from the camera to the monitor. The control signals may be a.c. or d.c. signals but more conveniently would be encoded and sent by means of frequency shift keyed signals. The by-pass path at each correcting amplifier needs to be such that the control signals are not fed to the input of the amplifier. This can be achieved by including a high-pass filter at the input of each amplifier which will prevent the low frequency control signals from being applied to the amplifier inputs. Further the by-pass path needs to include a low pass filter to prevent the output of the correcting amplifier being fed back to its input.

Figure 8 shows a suitable arrangement for each of the correcting amplifiers for the system shown in Figure 7. As shown in Figure 8 the correcting amplifier 150 has an input 151 which fed by a high-pass filter 152 to a correcting and amplifying circuit 153 whose output is fed to a terminal 154. A further terminal 155 is fed _via_ a low-pass filter 156 to an output terminal 157. The terminals 154 and 155 may be linked together as may terminals 151 and 157. The terminals 155 and 157 together with the low-pass filter 156 provide a by-pass path for the low-frequency signals sent from the control unit 114 to the camera 111 while the high-pass filter 152 prevents any of the low-frequency signals from being fed to the input of the amplifier. Similarly the low-pass filter 156 prevents any of the output signals from the amplifier 153 from being fed back to its input.

Since the control signals are sent at low frequency, it is not necessary to amplify these signals to the same extent as is required by the high frequency video signals passing from the camera to the monitor. Consequently, provided the transmission path length is not too long, the correcting amplifiers may merely be by-passed by the low-pass filters without requiring further amplification of the low frequency signals. If the path length becomes too long then it is of course possible to include amplifiers for the low frequency signal in the path between the terminals 155 and 157.

The arrangement shown in Figure 7 enables the same pair of conductors to be used both for sending the video signal from the camera to the monitor and for sending control signals from a position adjacent to the monitor to the camera, thus, minimising the number of conductors required to be used for the closed circuit television system. It would, of course be possible incorporate the control unit 114 into the monitor 113 as a single complete unit. However, it is normally more convenient to have a separate control unit as there may be a number of cameras which can be fed into any one monitor and one camera may be fed to more than one monitor.

The modulator 102 and demodulator 112 may be constructed to be identical to the modulator 2 and demodulator 12 of the system shown in Figure 1 and when the length of the transmission path is above about 8 miles would need to have the characteristics described with reference to Figure 1. If the demodulator 112 does not include a high pass filter it is necessary to include a high pass filter in the transmission line 111 between the input of the demodulator 112 and the point at which the transmission line 115 is fed into the transmission line 111 to prevent the signals from the control unit 114 interfering with the operation of the demodulator.

CLAIMS:-

1. A closed circuit television system comprising a television camera, a frequency modulator for frequency modulating the video signal produced by the camera, means for feeding the frequency modulated signal to one end of a transmission path which comprises balanced pair conductors provided with video correcting amplifiers at intervals along its length, and a demodulator for demodulating the signal received at the other end of the transmission path in which the demodulator includes a high-pass filter which is effective to reduce the amplitude of the lower sideband relative to that of the carrier signal.

2. A closed circuit television system as claimed in Claim 1 in which the cut-off frequency of the high pass filter is adjustable.

3. A closed circuit television system as claimed in Claim 1, in which the high-pass filter has a cut-off frequency of approximately 1 MHz.

4. A closed circuit television system as claimed in Claim 1, 2 or 3, in which a data channel is frequency division multiplexed with the video signal, the data channel occupying the area of the frequency spectrum below that of the frequency modulated video signal.

5. A closed circuit television system as claimed in any of Claims 1, 2, 3 or 4, in which the frequency demodulator includes a duplex limiter circuit which comprises first and second branches, the first branch comprising a low pass filter and the second branch comprising a high pass filter and a first limiting amplifier arranged in cascade, the first and second paths being combined at their outputs in a second limiting amplifier.

6. A closed circuit television system as claimed in any preceding claim, in which the modulator comprises a gain controlled amplifier the gain of which is reduced when the input video signal exceeds a preset level to prevent the output video signal from exceeding said preset level.

7. A closed circuit television system comprising a television

0157460
PHB33067EP

camera, a television monitor, a transmission path linking the monitor and camera for transmitting video signals from the camera to the monitor, the transmission path comprising balanced pair conductors having correcting amplifiers at intervals along their length, means for frequency modulating the video signal produced by the camera so that frequencies below a given frequency are not transmitted, and means for transmitting control signals having frequencies below said given frequency from the television monitor or a position adjacent thereto to the telephone camera along the transmission path, in which at each correcting amplifier a bypass link is provided, said bypass link comprising a low pass filter having a cut off frequency below said given frequency and in which a high pass filter is provided at the input of each correcting amplifier to prevent said control signals from being applied to the input of the correcting amplifier.

8. A closed circuit television system as claimed in Claim 7, in which the low pass filter has a cut off frequency below 100khz.

9. A closed circuit television system as claimed in Claim 7 or Claim 8, in which the high pass filter has a cut off frequency above 500Mhz.

*Fig.1.*

*Fig.7.*

0157460

1-Ⅳ-PHB 33067

## Fig.2.

## Fig.3.

**Fig.4.**

**Fig.5.**

**Fig.8.**

Fig.6.

4/4

0157460